# EUROPÄISCHE PATENTSCHRIFT

(11) **EP 1 147 325 B1**
(45) Veröffentlichungstag und Bekanntmachung des Hinweises auf die Patenterteilung: **26.11.2003**
(21) Anmeldenummer: 00902474.6
(22) Anmeldetag: 26.01.2000
(51) Int. Cl.: F16D 43/284

(54) **DREHZAHLDIFFERENZABHÄNGIGE HYDRAULISCHE KUPPLUNG MIT TEMPERATURKOMPENSATION**
SPEED DIFFERENCE-DEPENDENT HYDRAULIC COUPLING WITH TEMPERATURE COMPENSATION
EMBRAYAGE HYDRAULIQUE DEPENDANT DE LA DIFFERENCE DE REGIME ET A COMPENSATION DE TEMPERATURE

(30) Priorität: 26.01.1999 AT 4899 U
(43) Veröffentlichungstag der Anmeldung: 24.10.2001
(73) Patentinhaber: Magna Steyr Powertrain AG & Co KG, 8502 Lannach (AT)
(72) Erfinder: HOFER, Manfred, A-8041 Graz (AT); KALTMANN, Siegfried, A-8047 Graz (AT); STRASCHIL, Andreas, A-8010 Graz (AT)
(74) Vertreter: Kovac, Werner, Dipl.-Ing.
(86) Internationale Anmeldenummer: AT0000020
(87) Internationale Veröffentlichungsnummer: WO00045062

(56) Entgegenhaltungen:
- US-A- 4 094 393
- US-A- 5 595 214

## Beschreibung

Die Erfindung handelt von einer drehzahldifferenzabhängigen hydraulischen Kupplung, bestehend aus einem rotierenden Antriebsgehäuse, einer in diesem angeordneten hydrostatischen Verdrängungsmaschine, einer Ausgangswelle und einer Reibungskupplung zur Verbindung der Ausgangswelle mit dem Antriebsgehäuse, wobei bei Auftreten einer Differenzdrehzahl zwischen dem Antriebsgehäuse und der Ausgangswelle in einer Druckkammer ein Druck erzeugt wird, der eine Beaufschlagung der Reibungskupplung bewirkt, wobei die Druckkammer über mindestens ein Ventil mit einem Raum niedereren Druckes in Verbindung steht.

Derartige Kupplungen finden in verschiedenen Konstellationen im Antriebsstrang von Kraftfahrzeugen Verwendung, zur direkten Übertragung eines Drehmomentes oder zur Sperrung eines verbundenen Differentialgetriebes für den Antrieb der Räder einer Achse oder für die Verteilung des Antriebsmomentes zwischen zwei Achsen. In jedem Fall besteht die hydrostatische Verdrängungsmaschine aus einem Innenrotor und aus einem Aussenrotor, die bei Drehzahldifferenz zwischen dem Antriebsgehäuse und einer Ausgangswelle eine Relativbewegung ausführen und so einen Druck erzeugen.

Eine derartige Kupplung ist aus der US-A 5,536,215, Fig.1 und 7, bekannt. Bei dieser ist zwischen dem Druckraum und einem Raum niedereren Druckes, es ist der Kupplungsraum, ein von einem bimetallischen Blättchen gebildetes Ventil vorgesehen, das temperaturabhängige Viskositätsänderungen des Arbeitsfluids kompensieren soll. Dessen Wirkung ist jedoch. abgesehen von der notorischen Ungenauigkeit von sich krümmenden Bimetallblättchen, von Fliehkräften, Fluiddruck und weiteren hydraulischen Kräften beeinträchtigt.

Es ist somit Ziel der Erfindung, eine gattungsgemäße Kupplung bei möglichst einfacher und zuverlässiger Bauweise so zu gestalten, daß mit hoher Genauigkeit und Zuverlässigkeit temperaturbedingte Viskositätsschwankungen kompensiert werden.

Erfindungsgemäß wird das dadurch erreicht, daß ein Drosselventil vorgesehen ist, das von einem in einem Ventilraum geführten und auf einem Element temperaturabhängiger Länge abgestützten Ventilkörper gebildet ist, der eine mit einer Steueröffnung des Ventilraumes zusammenwirkende Steuerkante aufweist, wobei die Steueröffnung die Verbindung zwischen dem Druckraum und dem Raum niedereren Druckes herstellt.

Das Element temperaturabhängiger Länge macht die Temperaturkompensation von der Fliehkraft unabhängig, ergibt bei ausreichender Länge hohe Genauigkeit und, zusammen mit der Wirkung der Steuerkanten, genug Kraft um auch hohen Druck zu halten. Dadurch ist eine genau reproduzierbare Drosseleinstellung möglich, was funktionswesentlich ist, weil diese die Charakteristik der ganzen Kupplungseinheit bestimmt.

Vorzugsweise ist das Drosselventil in einer Ventilplatte ausgebildet, in welcher der Ventilraum eine in einer achsnormalen Ebene liegende Bohrung ist, die in geringem Abstand an der Mittenachse vorbeiführt (Anspruch 2). Die Ventilplatte braucht in achsialer Richtung nur sehr wenig Bauraum, trotzdem kann sie eine sehr lange achsnormale Bohrung enthalten, in der ein langes Element temperaturabhängiger Länge Raum findet und der Ventilkörper gut geführt ist. Dadurch, daß die Bohrung in geringem Abstand an der Mittenachse vorbeiführt, ist der Reibung verursachende Fliehkrafteinfluß quer zur Bewegungsrichtung des Ventilkörpers gering. Die so angeordnete Bohrung bietet auch Raum für eine Stellschraube, sodaß die Position des Ventilkörpers fein justiert werden kann.

In einer vorteilhaften Ausführungsform ist die Ventilplatte mit dem Antriebsgehäuse fest verbunden und die Druckkammer ist zwischen der Ventilplatte und einem mit der Reibungskupplung zusammenwirkenden Ringkolben ausgebildet (Anspruch 3). In einer anderen vorteilhaften Ausführungsform ist die Ventilplatte mit dem Ringkolben fest verbunden oder ein Teil dessen, und die Druckkammer zwischen dem rotierenden Antriebsgehäuse und dem die hydrostatische Verdrängungsmaschine aufnehmenden Ringkolben ist, wobei die Ventilplatte an der der Reibungskupplung abgewandten Seite des Ringkolbens angebracht ist (Anspruch 4). In beiden Ausführungsformen ist das Element temperaturabhängiger Länge von der Reibungskupplung so weit entfernt, daß deren Reibungswärme die Wärmeausdehnung des Elementes nicht verfälscht. Es reagiert somit nur auf die Temperatur des Fluides, dessen Viskositätsänderung ja ausgeglichen werden soll.

In einer bevorzugten Weiterbildung der Erfindung (Anspruch 5),
a) bildet die Steueröffnung des Ventilraumes einen diesen umgebenden Ringraum, der mit dem Druckraum in Verbindung steht,
b) ist der Ventilkörper ein Rohr, dessen dem Element temperaturabhängiger Länge abgewandte Seite die Steuerkante bildet und dessen dem Element temperaturabhängiger Länge zugekehrte Seite Öffnungen zum Ventilraum aufweist, und
c) steht der Ventilraum mit einer mittigen Zentralbohrung der Ventilplatte in Verbindung.

Der Ringraum um die Steueröffnung und die rohrförmige Ausbildung stellen sicher, daß der Druck von allen Seiten auf den Ventilkörper wirkt. Letztere erlaubt auch die saubere Bearbeitung der Steuerkante. Durch die Öffnungen an der Seite und die Strömungsverbindung des Ventilraumes mit einer mittigen Zentralbohrung der Ventilplatte strömt das Fluid am Element temperaturabhängiger Länge vorbei, sodaß es den Temperaturänderungen des Fluid schnell folgen kann.

In Verfeinerung des Erfindungsgedankens ist die Steuerkante so geformt, daß der in der Druckkammer herrschende Druck unabhängig von der Temperatur ist (Anspruch 6). Damit wird eine besonders genaue Temperaturkompensation erreicht, wobei die am Ventilkörper ausgebildete Steuerkante besonders einfach zu bearbeiten ist.

Das Element temperaturabhängiger Länge kann mit Vorteil entweder ein im Längsschnitt gewellter Metallbalg sein (Anspruch 7) oder aus einem geeigneten Kunststoff bestehen (Anspruch 8).

Weiters liegt es im Rahmen der Erfindung, die Ventilplatte mit einer weiteren in einer achsnormalen Ebene liegenden Bohrung zu versehen, die einen federbelasteten Kolben enthält und die mit der Druckkammer in Verbindung steht (Anspruch 9). Damit wird sozusagen in einem Aufwaschen, mit sehr geringem Aufwand und ähnlichen Vorteilen auch gleich eine Dämpfung hydraulischer Druckstöße erreicht, die die Genauigkeit der Temperaturkompensation beeinträchtigen könnten. In der gleichen Weise könnt die Ventilplatte ein mit dem Druckraum in Verbindung stehendes Überdruckventil aufweisen (Anspruch 10).

Im folgenden wird die Erfindung anhand von Abbildungen beschrieben und erläutert. Es stellen dar:
- Fig.1:: Längsschnitt durch eine erfindungsgemäße hydraulische Kupplung,
- Fig.2:: Querschnitt nach II-II in Fig.1, vergrößert,
- Fig.3:: Längsschnitt nach III-III in Fig.2,
- Fig.4:: Detail IV in Fig. 2, abgewickelt und stark vergrößert,
- Fig.5:: Längsschnitt durch eine erfindungsgemäß ausgestaltete hydraulische Kupplung in einer abgewandelten Ausführungsform.

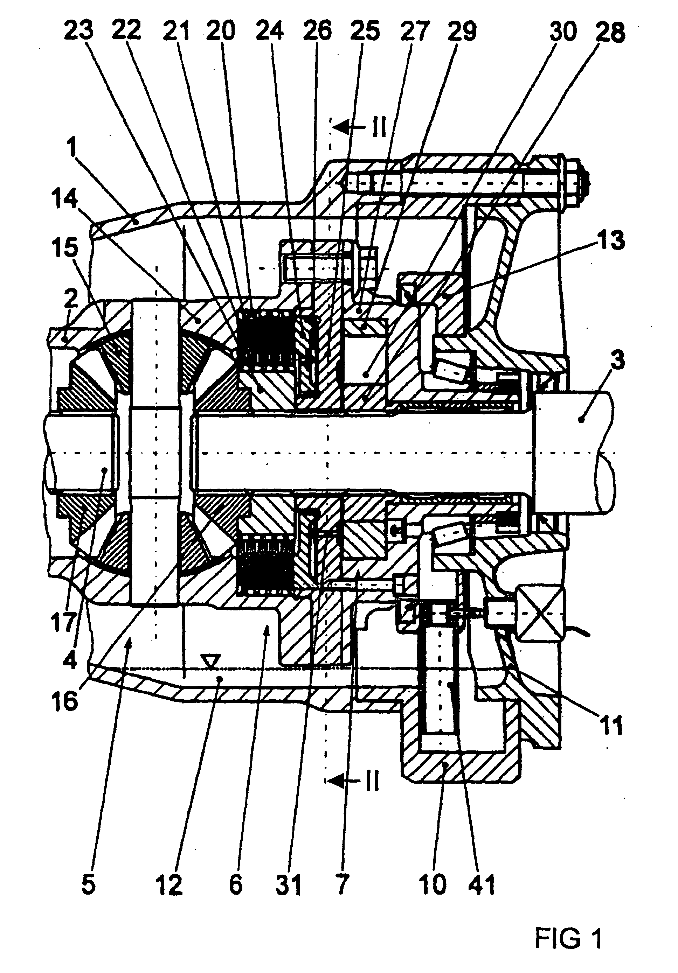

In der Figur 1 ist das stationäre Gehäuse der Antriebseinheit mit 1 bezeichnet. Ein Antriebsgehäuse 2 wird von einer nicht dargestellten Kraftquelle aus angetrieben. Eine erste Ausgangswelle 3 und eine zweite Ausgangswelle 4 sind mit den beiden Rädern einer Achse eines Fahrzeuges beziehungsweise mit zwei Achsen eines Fahrzeuges antriebsverbunden, was nicht dargestellt ist. Die beiden Ausgangswellen 3,4 werden von dem Antriebsgehäuse 2 über ein Differentialgetriebe 5, das in bekannter Weise die Momentenverteilung zwischen den beiden Ausgangswellen 3,4 besorgt, angetrieben. Weiters ist eine differenzdrehzahlabhängige hydraulische Kupplung zwischen dem Antriebsgehäuse 2 und der ersten Ausgangswelle 3 vorgesehen, die aus einer Reibungskupplung 6 und aus einer hydrostatischen Verdrängungsmaschine 7 besteht.

Das Gehäuse 1 ist nur angedeutet. Es ist mit einem Sumpfring 10 und einem Lagerschild 11 verschraubt. In dem Gehäuse befindet sich ein Ölsumpf 12. Am Lagerschild 11 sitzt innen ein Dichtungstragring 13. Das Differentialgetriebe 5 besteht aus einem einen Teil des Antriebsgehäuses 2 bildenden Differentialgehäuse 14, Ausgleichsrädem 15 mit ihrer Welle, einem ersten Abtriebskegelrad 16, das mit der ersten Ausgangswelle 3 fest verbunden ist und einem zweiten Abtriebskegelrad 17, das mit der zweiten Ausgangswelle 4 fest verbunden ist.

Die Reibungskupplung 6 ist ebenfalls im Differentialgehäuse 14 untergebracht, in dessen inneren Kuppelzähnen 20 Außenlamellen 21 drehfest aber axial verschiebbar angeordnet sind. Innenlamellen 22 sitzen drehfest auf einem Kupplungsinnenteil 23, das mit dem ersten Abtriebskegelrad 16 drehfest verbunden ist. Weiters gehört zur Reibungskupplung 6 noch ein Kolben 24, der einerseits Druck auf die Lamellen 21,22 ausübt und andererseits mit einer im Differentialgehäuse 14 befestigten Ventilplatte 25 eine Druckkammer 26 bildet.

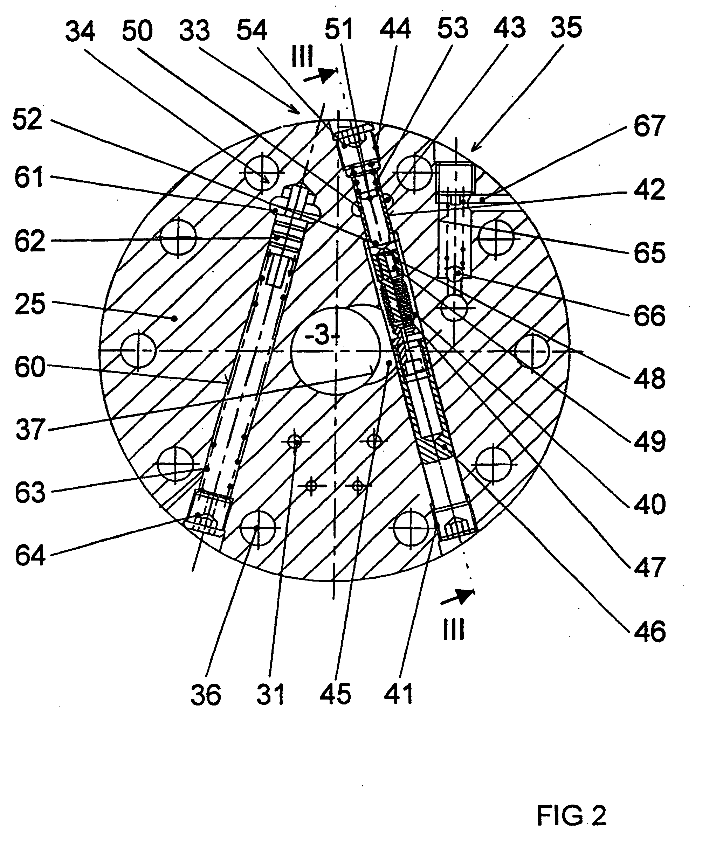

Die Verdrängungsmaschine 7 ist in einem mit dem Differentialgehäuse 14 verschraubten Pumpengehäuse 27 untergebracht und besteht im wesentlichen aus einem mit der ersten Ausgangswelle 3 drehfest verbundenen Innenrotor 28 und aus einem exzentrischen Außenrotor 29, der im Pumpengehäuse 27 drehbar ist. Zwischen den beiden Rotoren 28,29 ist ein Arbeitsraum 30 gebildet, dessen Form von der Bauart der Verdrängungsmaschine bestimmt wird. Von dem Arbeitsraum 30 führt mindestens ein Druckkanal 31 (siehe auch Fig.2) in den Druckraum 26 der Reibungskupplung, wobei je nach Bauart der Verdrängungsmaschine mehrere Druckkanäle mit entsprechenden selbststeuemden Vorrichtungen vorgesehen sein können.

In Fig.2 ist die Ventilplatte 25 im Schnitt gezeigt. Sie enthält in einer achsnormalen Ebene ein Drosselventil 33, einen Pulsationsdämpfer 34 und ein Überdruckventil 35. Mit 36 sind die Flanschlöcher bezeichnet, durch die hindurch die Ventilplatte 25 mit dem Antriebsgehäuse 2 und dem Pumpengehäuse 27 verschraubt ist. Im Zentrum hat die Ventilplatte 25 ein kreisförmiges Loch 37, durch das die Ausgangswelle 3 mit einigem Spiel hindurchtritt.

Das Drosselventil 33 ist in einem zylindrischen Ventilraum 40 ausgebildet, der eine in einer achsnormalen Ebene liegende, in geringem Abstand von der Ausgangswelle 3 vorbeiführende und an beiden Seiten offene zylindrische Bohrung ist. Der Ventilraum 40 endet an einer Seite in einem ersten Gewinde 41, und bildet nahe dem anderen Ende eine Passbohrung 42 und endet dort mit einem zweiten Gewinde 44. Die Passbohrung 42 ist von einem Ringraum 43 unterbrochen, der nach der Druckkammer 26 (Fig.1) hin offen ist. Der Ventilraum 40 ist etwa in der Mitte, dort wo der Abstand von der Abtriebswelle 3 am geringsten ist, zum kreisförmigen Loch 37 hin geöffnet, zu welchem Zweck eine Sichel 45 eingefräst ist, die den Ventilraum 40 aufschneidet.

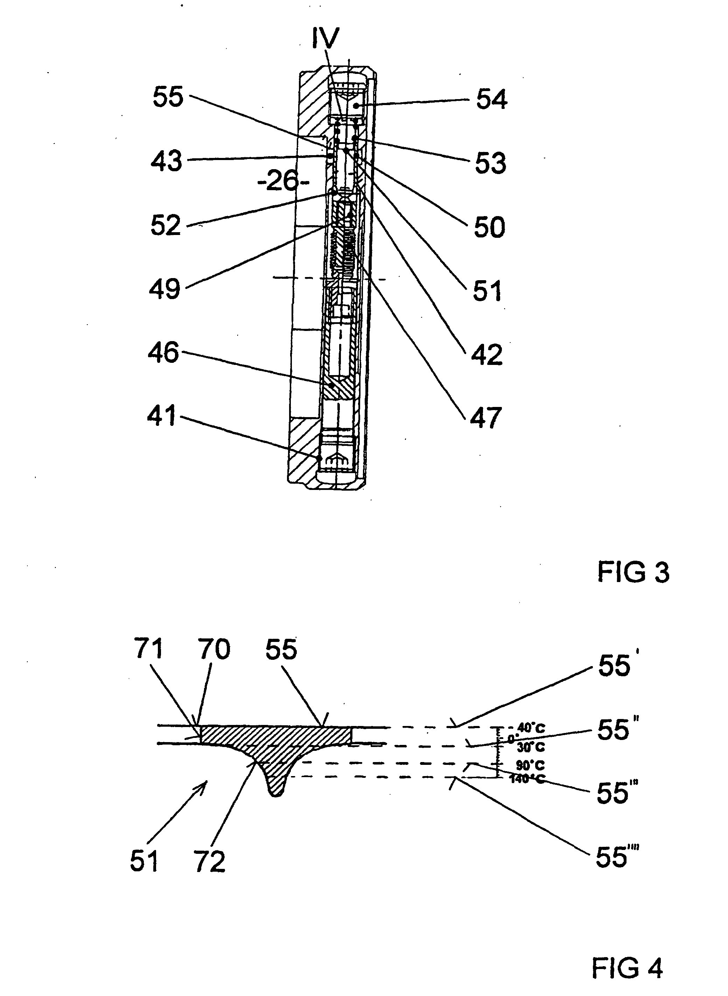

Im Inneren des Ventilraumes 40 (siehe auch Fig.3) befindet sich ein Ventilträger 46 mit einem in das erste Gewinde 41 eingeschraubten Schraubkopf. An dem Ventilträger 46 schließt ein Element temperaturabhängiger Länge 47, im gezeigten Ausführungsbeispiel ein Metallbalg mit gewelltem Längsschnitt, an, der mit einem Ventilkörper 48 über eine Verschraubung 49 fest verbunden ist. Der dem Element 47 abgekehrten Teil des Ventilkörpers 48 ist als Rohr 50 mit innenliegendem Strömungskanal ausgebildet und weist an seinem Ende eine Steuerkante 51 auf, die in noch zu beschreibender Weise mit einer Steueröffnung 55 des Ringraumes 43 zusammenwirkt. Auf der anderen Seite des Rohres sind seitliche Öffnungen 52 vorgesehen, durch die das Innere des Rohres 50 mit dem Ventilraum 40 in Strömungsverbindung steht. Auf das Ende des Rohres 50 wirkt noch eine Druckfeder 53, die sich an einem in das zweite Gewinde 44 eingeschraubten Gewindestopfen 54, abstützt.

Das Drosselventil 33 stellt die Verbindung zwischen dem Druckraum 26 und einem Raum niedereren Druckes beispielsweise dem Inneren der Reibungskupplung 6 her. Das unter Druck stehende Fluid gelangt aus der Druckkammer 26 in den Ringraum 43 und strömt an der mit der Steueröffnung des Ringraumes zusammenwirkenden Steuerkante 51 vorbei in das Innere des Rohres 50, durch die seitlichen Öffnungen 52 in den Ventilraum 40, wo es am Element temperaturabhängiger Länge 47 vorbeistreicht und dieses seine Temperatur annimmt, weiter in die Sichel 45 und von dort über das kreisförmige Loch und gegebenenfalls weitere Durchströmöffnungen oder -kanäle in das Innere der Reibungskupplung 6. Der zwischen dem Ringraum 43 und der Steuerkante 51 freigegebene Durchströmquerschnitt hängt durch die Wirkung des Elementes temperaturabhängiger Länge 47 von der Temperatur des Fluids ab. Ist dieses wärmer, seine Viskosität also geringer, so ist auch der Querschnitt kleiner.

Der Pulsationsdämpfer 34 besteht aus einer Bohrung 60 , die über einen Ringraum 61 mit der Druckkammer 26 in Verbindung steht und aus einem Kolben 62, der auf einer Seite von dem Druck im Ringraum 61 und auf der anderen von einer Druckfeder 63 beaufschlagt wird, die sich auf einem Gewindestopfen 64 abstützt. Die Bohrung 60 liegt wieder in einer achsnormalen Ebene und möglichst nahe dem kreisförmigen Loch 37 in der Ventilplatte 25. Weiters enthält die Ventilplatte 25 das Überdruckventil 35, das in einer weiteren in einer achsnormalen Ebene liegenden Bohrung 65 untergebracht ist. Diese steht über ein federbelastetes Kugelventil 66 mit einem Kanal 67 in Verbindung, welcher wieder zu der Druckkammer 26 hin offen ist. Bei Überschreiten eines durch das Kugelventil definierten Druckes tritt Fluid durch die Auslassöffnung 67 aus.

Fig.4 zeigt das Detail IV, das Zusammenwirken der Steuerkante 51 mit der achsnormalen Wand der Steueröffnung 55 des Ringraumes 43. Zur Vereinfachung der Darstellung ist die Bewegung umgekehrt. Die Steuerkante 51 ist ortsfest gezeichnet und die von der Begrenzung des Ringraumes gebildete gerade Kante 55 ist in verschiedenen Stellungen gezeichnet, die jeweils einer bestimmten Temperatur (zwischen - 40 und + 140 Grad) zugeordnet sind. Die Steuerkante 51 ist hier symmetrisch und besteht aus einem geraden achsnormalen Teil 70, an dem rechtwinkelig eine Stufe 71 und an diese wieder eine Kurve 72, anschließt, deren Form sich aus physikalischen Gesetzmässigkeiten ergibt. Die beiden Äste der Kurve 72 bilden gewissermaßen ein "Flußtal", das bei sinkendem "Wasserspiegel" (die Kante 55) der Strömung einen abnehmenden Querschnitt bietet. Die verschiedenen Stellungen des Randes 55 des Ringraumes sind mit 55' bis 55"" dargestellt. Für die Stellung 55' ist der Durchströmquerschnitt schraffiert. Bei steigender Temperatur verringert er sich auf den Teil unter den Geraden 55",55"' oder 55"".

Aus Obigem ist zu erkennen, daß die für die Lösung des Problems wesentlichen Merkmale in der Gestaltung und Anordnung der Ventilplatte 25 liegen. Dementsprechend kann die gesamte hydraulische Kupplung sehr verschieden gestaltet sein. Bei dem in Fig.1 beschriebenen Ausführungsbeispiel handelt es sich um eine mit einem Differential vereinte Ausführungsform, bei der die Druckkammer 26 zwischen der Verdrängungsmaschine und der Kupplung in einer mit dem Antriebsgehäuse fest verbundenen Stellung liegt. Der Erfindungsgedanke ist auf anders aufgebaute Kupplungen ebenso anwendbar.

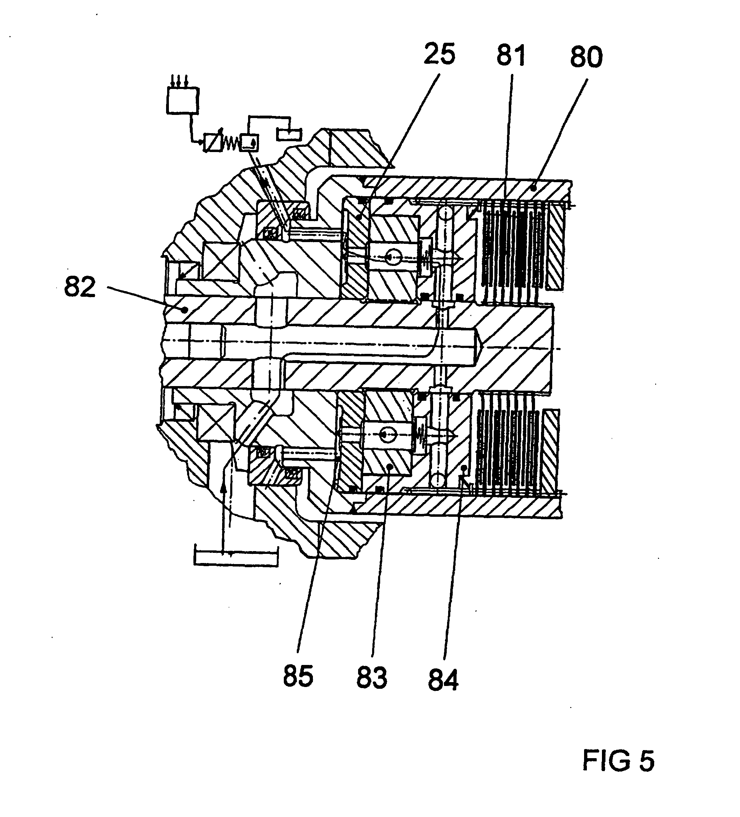

So zeigt Fig.5 eine abgewandelte Ausführungsform, bei der ein Antriebsgehäuse 80, ohne daß ein Differential vorhanden wäre, über eine Reibungskupplung 81 eine Abtriebswelle 82 treibt. Dabei ist eine Hydrostateinheit 83 in einem Kolben 84 untergebracht, der das Schliessen der Reibungskupplung 81 bewirkt und die Ventilplatte 25 bildet den Deckel des Kolbens 84. Hier ist die Ventilplatte 25 besonders weit von der Reibungskupplung 81 entfernt, wodurch von dieser eventuell ausgehende Temperaturabweichungen noch kleiner sind. Die Zwischenplatte 25 bildet mit dem Antriebsgehäuse 80 eine Druckkammer 85, die bezüglich der Ventilplatte 25 genau dem oben beschriebenen Ausführungsbeispiel entspricht.

## Patentansprüche

1. Drehzahldifferenzabhängige hydraulische Kupplung, bestehend aus einem rotierenden Antriebsgehäuse (2;80), einer in diesem angeordneten hydrostatischen Verdrängungsmaschine (7), einer Ausgangswelle (3) und einer Reibungskupplung (6) zur Verbindung der Ausgangswelle (3) mit dem Antriebsgehäuse (2;80), wobei bei Auftreten einer Differenzdrehzahl zwischen dem Antriebsgehäuse und der Ausgangswelle in einer Druckkammer (26;85) ein Druck erzeugt wird, der eine Beaufschlagung der Reibungskupplung (6) bewirkt, wobei die Druckkammer über mindestens ein Ventil mit einem Raum niedereren Druckes in Verbindung steht, **dadurch gekennzeichnet, daß** ein Drosselventil (33) vorgesehen ist, das von einem in einem Ventilraum (40) geführten und auf einem Element temperaturabhängiger Länge (47) abgestützten Ventilkörper (48) gebildet ist, der eine mit einer Steueröffnung (55) des Ventilraumes (40) zusammenwirkende Steuerkante (51) aufweist, wobei die Steueröffnung (55) die Verbindung zwischen der Druckkammer (26;85) und dem Raum niedereren Druckes herstellt.

2. Drehzahldifferenzabhängige hydraulische Kupplung nach Anspruch 1, **dadurch gekennzeichnet, daß** das Drosselventil (33) in einer Ventilplatte (25) ausgebildet ist, in welcher der Ventilraum (40) eine in einer achsnormalen Ebene liegende Bohrung ist, die in geringem Abstand an der Mittenachse (3) vorbeiführt.

3. Drehzahldifferenzabhängige hydraulische Kupplung nach Anspruch 2, **dadurch gekennzeichnet, daß** die Ventilplatte (25) mit dem Antriebsgehäuse (2) fest verbunden und die Druckkammer (26) zwischen der Ventilplatte (25) und einem mit der Reibungskupplung (6) zusammenwirkenden Ringkolben (24) ausgebildet ist.

4. Drehzahldifferenzabhängige hydraulische Kupplung nach Anspruch 1, **dadurch gekennzeichnet, daß** die Ventilplatte (25) mit einem Kolben (84) fest verbunden oder ein Teil dessen ist, und die Druckkammer (85) zwischen dem rotierenden Antriebsgehäuse (80) und dem die hydrostatische Verdrängungsmaschine (7) aufnehmenden Kolben (84) ist, wobei die Ventilplatte (25) an der der Reibungskupplung (6) abgewandten Seite des Kolbens (84) angebracht ist.

5. Drehzahldifferenzabhängige hydraulische Kupplung nach Anspruch 1, **dadurch gekennzeichnet, daß**
a) die Steueröffnung (55) des Ventilraumes (40) einen diesen umgebenden Ringraum (43) bildet, der mit der Druckkammer (26;85) in Verbindung steht,
b) der Ventilkörper (46) zumindest teilweise ein Rohr (50) ist, dessen dem Element temperaturabhängiger Länge (47) abgewandte Seite die Steuerkante (51) bildet und dessen dem Element temperaturabhängiger Länge zugekehrte Seite Öffnungen (52) zum Ventilraum (40) aufweist, und
c) der Ventilraum (40) mit einer mittigen Zentralbohrung (37) der Ventilplatte (25) in Verbindung steht.

6. Drehzahldifferenzabhängige hydraulische Kupplung nach Anspruch 5, **dadurch gekennzeichnet,** die Steuerkante (51) so geformt ist, daß der in der Druckkammer (26;85) herrschende Druck unabhängig von der Temperatur ist.

7. Drehzahldifferenzabhängige hydraulische Kupplung nach Anspruch 1, **dadurch gekennzeichnet, daß** das Element temperaturabhängiger Länge (47) ein im Längsschnitt gewellter Metallbalg ist.

8. Drehzahldifferenzabhängige hydraulische Kupplung nach Anspruch 1, **dadurch gekennzeichnet, daß** das Element temperaturabhängiger Länge (47) aus einem geeigneten Kunststoff besteht.

9. Drehzahldifferenzabhängige hydraulische Kupplung nach Anspruch 2, **dadurch gekennzeichnet, daß** die Ventilplatte (25) eine weitere in einer achsnormalen Ebene liegende Bohrung (60) aufweist, die einen federbelasteten Kolben (62) enthält und die mit der Druckkammer (26;85) in Verbindung steht.

10. Drehzahldifferenzabhängige hydraulische Kupplung nach Anspruch 2, **dadurch gekennzeichnet, daß** die Ventilplatte (25) ein mit der Druckkammer (26;85) in Verbindung stehendes Überdruckventil (35) aufweist.

## Claims

1. A difference-in-speed-dependent hydraulic coupling comprising a rotating drive casing (2; 80), a hydrostatic displacement machine (7) arranged therein, an output shaft (3) and a friction clutch (6) for connecting the output shaft (3) to the drive casing (2; 80), the occurrence of a differential speed between the drive casing and the output shaft producing, in a pressure chamber (26; 85), a pressure which acts on the friction clutch (6), the pressure chamber being connected to a lower-pressure chamber via at least one valve, **characterized in that** there a throttle valve (33) is provided, which is formed by a valve body (48) which is guided in a valve chamber (40), is supported on an element of temperature-dependent length (47) and has a control edge (51 ) which interacts with a control opening (55) of the valve chamber (40), the control opening (55) producing the connection between the pressure chamber (26; 85) and the lower-pressure chamber.

2. The difference-in-speed-dependent hydraulic coupling as claimed in claim 1, **characterized in that** the throttle valve (33) is formed in a valve plate (25) in which the valve chamber (40) is a bore which is located in an axis-normal plane and leads past the center axis (3) at a small distance therefrom.

3. The difference-in-speed-dependent hydraulic coupling as claimed in claim 2, **characterized in that** the valve plate (25) is firmly connected to the drive casing (2), and the pressure chamber (26) is formed between the valve plate (25) and an annular piston (24) which interacts with the friction clutch (6).

4. The difference-in-speed-dependent hydraulic coupling as claimed in claim 1, **characterized in that** the valve plate (25) is firmly connected to a piston (35) or is a part of the same, and the pressure chamber (85) is between the rotating drive casing (80) and the piston (84), which accommodates the hydrostatic displacement machine (7), the valve plate (25) being provided on that side of the piston (84) which is directed away from the friction clutch (6).

5. The difference-in-speed-dependent hydraulic coupling as claimed in claim 1, **characterized in that**
a) the control opening (55) of the valve chamber (40) forms an annular chamber (43) which encloses said valve chamber and is connected to the pressure chamber (26; 85),
b) the valve body (46) is, at least in part, a tube (50) of which the side which is directed away from the element of temperature-dependent length (47) forms the control edge (51 ) and the side which is directed toward the element of temperature-dependent length has openings (52) to the valve chamber (40), and
c) the valve chamber (40) is connected to a central bore (37) of the valve plate (25).

6. The difference-in-speed-dependent hydraulic coupling as claimed in claim 5, **characterized in that** the control edge (51) is formed such that the pressure prevailing in the pressure chamber (26; 85) is independent of the temperature.

7. The difference-in-speed-dependent hydraulic coupling as claimed in claim 1, **characterized in that** the element of temperature-dependent length (47) is a metal bellows which undulates in longitudinal section.

8. The difference-in-speed-dependent hydraulic coupling as claimed in claim 1, **characterized in that** the element of temperature-dependent length (47) consists of a suitable plastic.

9. The difference-in-speed-dependent hydraulic coupling as claimed in claim 2, **characterized in that** the valve plate (25) has a further bore (60) which is located in an axis-normal plane, contains a spring-loaded piston (62) and is connected to the pressure chamber (26; 85).

10. The difference-in-speed-dependent hydraulic coupling as claimed in claim 2, **characterized in that** the valve plate (25) has a pressure release valve (35) which is connected to the pressure chamber (26; 85).

## Revendications

1. Embrayage hydraulique dépendant de la différence de vitesses de rotation, comprenant une boîte de vitesse rotative (2 : 80), un dispositif à refoulement hydrostatique (7) disposé dans ladite boîte de vitesse, un arbre de sortie (3) et un embrayage à friction (6) destiné relier l'arbre de sortie (3) à la boîte de vitesse (2 ; 80) ;
une pression étant générée dans une chambre de pression (26 ; 85) lorsque la vitesse de rotation diffère entre la boîte de vitesse et l'arbre de sortie pour réaliser un enclenchement de l'embrayage à friction (6) ;
la chambre de pression étant reliée à un espace de plus basse pression via un clapet,
**caractérisé en ce qu'**il est prévu un clapet d'étranglement (33) formé par un corps de clapet (48) qui est guidé dans un espace de clapet (40), qui s'appuie sur un élément dont la longueur (47) varie en fonction de la température et qui comporte un bord de commande (51) coopérant avec une ouverture de commande (55) de l'espace de clapet (40), laquelle ouverture de commande (55) établit la liaison entre la chambre de pression (26 ; 85) et la chambre de plus basse pression.

2. Embrayage hydraulique dépendant de la différence de vitesses de rotation selon la revendication 1, **caractérisé en ce que** le clapet d'étranglement (33) est conformé en un disque de clapet (25) dans lequel l'espace de clapet (40) est agencé en un alésage qui est situé dans un plan perpendiculaire à l'axe et qui passe à un faible distance de l'axe médian (3).

3. Embrayage hydraulique dépendant de la différence de vitesses de rotation selon la revendication 2, **caractérisé en ce que** le disque de clapet (25) est relié fixe à la boîte de vitesse (2), et la chambre de pression (26) est conformée entre le disque de clapet (25) et un piston annulaire (24) coopérant avec l'embrayage à friction (6).

4. Embrayage hydraulique dépendant de la différence de vitesses de rotation selon la revendication 1, **caractérisé en ce que** le disque de clapet (25) est relié fixe à un piston (84) ou est une partie de celui-ci, et la chambre de pression (85) est située entre la boîte de vitesse rotatif (80) et le piston (84) recevant le dispositif à refoulement hydrostatique (7), le disque de clapet (25) étant monté du côté du piston (84) qui est opposé à l'embrayage à friction (6).

5. Embrayage hydraulique dépendant de la différence de vitesses de rotation selon la revendication 1, **caractérisé en ce que**
a) l'ouverture de commande (55) de l'espace de clapet (40) forme un espace annulaire (43) qui entoure ledit espace de clapet et qui est en liaison avec la chambre de pression (26 ; 85),
b) le corps de clapet (46) est au moins partiellement un tube (50) dont le côté, qui est opposé à l'élément dont la longueur (47) varie en fonction de la température, forme le bord de commande (51), et dont le côté, qui est dirigé vers l'élément dont la longueur varie en fonction de la température, comporte des ouvertures (52) menant à l'espace de clapet (40), et
c) l'espace de clapet (40) est en liaison avec un alésage médian central (37) ménagé dans le disque de clapet (25).

6. Embrayage hydraulique dépendant de la différence de vitesses de rotation selon la revendication 5, **caractérisé en ce que** le bord de commande (51) est conformé de telle sorte que la pression régnant dans la chambre de pression (26 ; 85) est indépendante de la température.

7. Embrayage hydraulique dépendant de la différence de vitesses de rotation selon la revendication 1, **caractérisé en ce que** l'élément dont la longueur (47) varie en fonction de la température est un soufflet métallique ondulé en coupe longitudinale.

8. Embrayage hydraulique dépendant de la différence de vitesses de rotation selon la revendication 1, **caractérisé en ce que** l'élément dont la longueur (47) varie en fonction de la température est en une matière plastique appropriée.

9. Embrayage hydraulique dépendant de la différence de vitesses de rotation selon la revendication 2, **caractérisé en ce que** le disque de clapet (25) comporte un autre alésage (60) situé dans un plan perpendiculaire à l'axe, qui contient un piston (62) contraint par un ressort et qui est en liaison avec la chambre de pression (26 ; 85).

10. Embrayage hydraulique dépendant de la différence de vitesses de rotation selon la revendication 2, **caractérisé en ce que** le disque de clapet (25) comporte un clapet de surpression (35) qui est en liaison avec la chambre de pression (26 ; 85).
